# EUROPEAN PATENT APPLICATION

(11) **EP 4 663 520 A1**
(43) Date of publication of application: **17.12.2025**
(21) Application number: 25182137.7
(22) Date of filing: 11.06.2025
(51) Int. Cl.: B62D 33/027

(54) **DEVICE FOR ROAD TRANSPORT OF GOODS WITH INTEGRATED LOAD SECURING**

(30) Priority: 11.06.2024 BE 202405343
(71) Applicant: Beck, Dirk, 9170 Sint-Gillis-Waas (BE)
(72) Inventor: Beck, Dirk, 9170 Sint-Gillis-Waas (BE)
(74) Representative: Brantsandpatents bv

(57) **Abstract**

The present invention relates to a transport device (1) for road transport of goods with integrated load securing, wherein the transport device (1) comprises a loading bed (2) with a front wall (4) on a chassis (3), wherein the transport device (1) comprises, at two longitudinal edges (5) of the loading bed (2), lying profiles (6) for securing the goods, wherein the profiles (6) extend in a longitudinal direction, wherein the profiles (6) are translationally movable in a height direction, wherein the profiles (6) on the same longitudinal edge (5) are coupled to each other by means of a series of slats (7) positioned one above the other, wherein the slats (7) of each series of slats (7) are alternately hingedly coupled at a first end or an opposite second end to a slat (7) positioned thereabove, wherein the slats (7) form a foldable accordion mechanism, wherein each profile (6) is hingedly coupled to a slat (7) between the first end and the second end, and wherein a first end of each profile (6) is received in at least one guide(16).

## Description

### TECHNICAL FIELD

The invention relates to a transport device for road transport of goods with integrated load securing, wherein the transport device comprises a loading bed with a front wall on a chassis. In a second aspect, the invention also relates to a method for securing goods during road transport.

### PRIOR ART

Securing goods on an open loading bed during road transport is mainly done with tie-down straps and is known in the prior art. Sometimes the tie-down straps are combined with a net or tarp to hold the goods together. For securing goods on the loading bed, the tie-down straps are hooked to rings, comprised in the loading bed, at both longitudinal side edges of the loading bed. The goods are fixed under tension on the loading bed by reliable fastening mechanisms such as ratchets or cam buckles.

A disadvantage is that throwing the tie-down straps over is not always easy when the goods extend to a height above an operator's outstretched arm. As a result, it is necessary to climb on the goods in order to secure them, which entails a safety risk and can be time-consuming to secure the goods properly.

EP3173286 relates to a transport vehicle for general cargo, in particular for bales. RU2067059 relates to a transformable vehicle body with corner and intermediate telescopic racks.

The present invention aims to at least find a solution to some of the above-mentioned problems or disadvantages.

### SUMMARY OF THE INVENTION

In a first aspect, the present invention relates to a transport device for road transport of goods with integrated load securing according to claim 1.

This embodiment is advantageous in that the goods can be secured on the loading bed in a time-efficient manner. No tie-down straps are needed to secure the load. Moreover, despite the formation of a side wall, the goods can still be loaded and unloaded from the longitudinal edges of the loading bed. Furthermore, greater safety during road transport is possible because the goods cannot shift during road transport. It is also advantageous that the load securing of the transport device can be limited to a height that corresponds to a loading height of the stacked goods.

Preferred embodiments of the transport device are set forth in claims 2 to 13.

In a second aspect, the present invention relates to a method for securing goods during road transport according to claim 14.

This embodiment is advantageous in that the goods can be secured on the loading bed in a time-efficient manner. Moreover, despite the formation of a side wall, the goods can still be loaded and unloaded from the longitudinal edges of the loading bed. Furthermore, greater safety during road transport is possible because the goods cannot shift during road transport.

### DESCRIPTION OF THE FIGURES

**Figure 1** shows a schematic representation in a side view of a transport device according to an embodiment of the present invention.
**Figure 2** shows a schematic representation in a top view of a transport device according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a transport device for road transport of goods with integrated load securing.

The transport device comprises a loading bed for stacking goods, wherein the loading bed is placed on a chassis and a front wall extends at a front side of and transversely to the loading bed in a direction away from the chassis.

According to one embodiment, the transport device comprises profiles, which are in a lying position, for securing the goods. The profiles are provided on two longitudinal edges of the loading bed. The profiles extend in a longitudinal direction. The profiles are translationally movable in a height direction. The profiles on the same longitudinal edge are coupled to each other by means of a series of slats positioned one above the other. The slats of each series of slats are alternately hingedly coupled at a first end or an opposite second end to an overlying slat. An uppermost slat of the series of slats is only hingedly coupled at a first end to an underlying slat. A bottom slat of the series of slats is translationally movable at a first end in the longitudinal direction. The bottom slat of the series of slats is hingedly coupled at the opposite second end to an overlying slat. The slats form a foldable accordion mechanism. Each profile is hingedly connected to the slat between the first end and the second end of a slat. A first end of each profile is received in at least one guide, wherein the guide is oriented in the height direction. Preferably, the guide is comprised on or in the front wall.

The longitudinal direction is a direction along a longest length of the loading bed. The height direction is a direction perpendicular to the plane in which the loading bed extends. A width direction is a direction in the plane of the loading bed, perpendicular to the longitudinal direction.

A set comprises a number of profiles that are positioned on the same longitudinal edge and which are coupled to each other by means of one or more adjacent series of slats positioned one above the other. Coupled profiles are thus those profiles which are comprised in one set.

This embodiment is advantageous in that the goods can be secured on the loading bed in a time-efficient manner. Moreover, despite the formation of a side wall, the goods can still be loaded and unloaded from the longitudinal edges of the loading bed.

According to one embodiment, the profiles have a width in a width direction of between 5 cm and 25 cm.

Preferably, the profiles have a width of at most 20 cm, more preferably of at most 15 cm.

Preferably, the profiles have a width of at least 5 cm, more preferably of at least 10 cm.

According to one embodiment, the profiles have a height in a height direction of between 10 cm and 40 cm.

Preferably, the profiles have a height of at most 30 cm, more preferably of at most 25 cm.

Preferably, the profiles have a height of at least 15 cm, more preferably of at least 20 cm.

According to one embodiment, the slats have a width in a width direction of between 1 cm and 15 cm.

Preferably, the slats have a width of at most 10 cm, more preferably of at most 8 cm, and even more preferably of at most 5 cm.

Preferably, the slats have a width of at least 2 cm, more preferably of at least 3 cm.

According to one embodiment, the slats have a length, in a direction in which the slats extend, of between 50 cm and 175 cm.

Preferably, the slats have a length of at most 150 cm, more preferably of at most 135 cm, and even more preferably of at most 120 cm.

Preferably, the slats have a length of at least 75 cm, more preferably of at least 100 cm.

It is not necessary that each profile, in the unfolded state, is positioned equidistant from the others. Consequently, the slats within a series of coupled slats can all have a different length.

According to one embodiment, the two longitudinal edges of the loading bed comprise multiple series of interconnected slats, wherein each of the profiles is hingedly coupled to more than one series of interconnected slats. Preferably, each of the two longitudinal edges of the loading bed comprises at most twelve series of interconnected slats, more preferably at most eight, and even more preferably at most four. Preferably, the multiple series of interconnected slats are evenly spaced over a length of the loading bed. "Evenly spaced" means, in the context of this document, a same distance between successive series of interconnected slats in the longitudinal direction, with a deviation of at most 5% relative to the length of the loading bed.

According to one embodiment, a set of profiles comprises multiple profiles hingedly coupled to a slat at a point between a center of the slat and a coupling with an overlying slat, in a direction in which said slat extends. Preferably, said profiles are hingedly coupled to the slat at a point between the center of said slat and a point located one-fifth of the length of the slat away from the coupling with the overlying slat, in the direction in which said slat extends, more preferably between the center of said slat and a point located one-fourth of the length of the slat away from the coupling with the overlying slat, in a direction in which said slat extends.

According to one embodiment, the profiles and the slats are storable in boxes in the folded state. The profiles are slid next to and/or under each other like an accordion. The profiles are positioned next to each other in the height and/or width direction. This is advantageous so that the profiles, when not securing the goods, are shielded, whereby they cannot be damaged during, for example, the loading and unloading of the goods. Moreover, the profiles are compactly storable in the boxes.

According to one embodiment, each longitudinal edge of the loading bed comprises one or more boxes. Preferably, a number of boxes comprised on one of the two longitudinal edges of the loading bed is between one and six, preferably at most four, and more preferably at most three.

According to one embodiment, each box comprises one set. Preferably, one set consists of at most thirty profiles, more preferably of at most fifteen profiles, even more preferably of at most nine profiles, even more preferably at most six profiles, and most preferably at most three profiles.

According to one embodiment, the multiple series of interconnected slats on the same longitudinal edge of the loading bed are storable in one box. Preferably, said multiple series of interconnected slats are connected to each other by the profiles. Alternatively, said multiple series of interconnected slats are each storable in a separate box per series of interconnected slats. Consequently, the profiles will not connect said multiple series of interconnected slats to each other.

According to one embodiment, the profiles are coupled to the boxes. The boxes are coupled to side walls of the loading bed. The side walls are longitudinal walls of the loading bed, transverse to the plane in which the loading bed extends. Alternatively, the boxes are integrated into the chassis. Preferably, the boxes are integrated into longitudinal support beams of the chassis. Preferably, the loading bed rests on at least a part of the support beams of the chassis. This embodiment is advantageous in that the series of slats and coupled profiles are not detachable from the loading bed. Preferably, in the unfolded state, the bottom slat does not extend beyond a bottom of the box. The bottom is a wall of one of the boxes which is located on a side opposite to a side through which the slats can be unfolded.

According to one embodiment, the profiles in the folded state are capable of being covered in the boxes by means of lids. The lids of the boxes are preferably openable and closable by folding. Preferably, the lids can be folded open and closed by means of one or more hinges. An upper side of the lids, in the closed state, preferably lies in the plane of the loading bed that faces away from the chassis. The foldable lids are advantageous as additional load securing means in the width direction of the loading bed when in the opened position. The lids are additionally advantageous so that the profiles, when not securing the goods, are shielded, whereby they cannot be damaged during, for example, the loading and unloading of goods.

According to an alternative embodiment, the lids are slidable. Preferably, the lids are slidable like a roller shutter toward an end of the boxes in the longitudinal direction. More preferably, the lids are slidable to under or into the boxes in an open position.

According to one embodiment, the boxes comprise at least one opening in the bottom. Through the opening, water and/or dirt can be removed from the boxes during transport or when stationary.

According to one embodiment, the profiles can be folded or unfolded by a first drive system. The first drive system is coupled to a bottom slat of each series of slats. Preferably, the first drive system is selected from a non-limiting list of: piston-cylinder mechanisms, spindles, linear actuators, a rack and pinion mechanism, a belt and pulley system, etc. More preferably, the drive system is a piston-cylinder mechanism parallel to the longitudinal edges of the loading bed. This embodiment is advantageous in that the accordion mechanism does not need to be pulled manually to be unfolded, but this can be performed by mechanical transmission, whereby the force used by an operator can be less than that for completely manually folding and unfolding the accordion mechanism.

According to one embodiment, the first drive system is coupled to the bottom slat of each series of slats on the underside of the loading bed. Preferably, the first drive system is coupled to the bottom slat of each series of slats within a plane of the side walls of the loading bed.

According to one embodiment, the slats form scissor mechanisms. Lower ends of the scissor mechanisms are slidable in lower guides. Preferably, upper ends of the scissor mechanisms are slidable in a longitudinal direction on a top profile. The top profile is a profile that is located furthest from the loading bed in the height direction when in the unfolded state. The upper ends of the scissor mechanisms are the ends located furthest from the loading bed in the unfolded state. It is advantageous that the scissor mechanisms provide additional cross-bracing, so that the profiles cannot deflect during road transport if load shifting occurs. One of the scissor mechanisms is composed of two slats which are hinged together at a pivot point. Preferably, when the scissor mechanism is in the unfolded state, said pivot point is located halfway scissor mechanism in the height direction.

According to one embodiment, each lower guide is comprised within one box. Preferably, each of the lower guides is positioned on an inside of said box. This is advantageous so that less dirt can enter the lower guides.

According to one embodiment, one of the upper ends of the scissor mechanisms, in the unfolded state, can be coupled to the front wall with a connecting piece. Preferably, one of the upper ends of the scissor mechanisms, in the unfolded state, can be coupled onto an adjacent side wall of the front wall. Preferably, the adjacent side wall is a side wall of the front wall against which the profiles abut as an additional safeguard against bending outwards relative to the loading bed during transport. Preferably, the connecting piece is a lever lock, a slide lock, or another connecting piece that can connect the upper end of the scissor mechanisms to the front wall. This embodiment is advantageous for locking a top side of the scissor mechanisms to a top side of the front wall, prevent the scissor mechanisms from folding during road transport.

According to one embodiment, multiple scissor mechanisms are comprised on each of the two longitudinal edges of the loading bed. The multiple scissor mechanisms are connected to each other by the profiles, which extend over at least 90% of the length of the loading bed. Along each of the longitudinal edges of the loading bed, the scissor mechanisms are storable in a single box. Alternatively, multiple scissor mechanisms are each storable in a separate box per scissor mechanism. Consequently, the profiles will not connect the scissor mechanisms to each other.

According to one embodiment, the loading bed comprises a rear wall. The rear wall is hinged to a rear side of the loading bed. In the unfolded state, the rear wall extends parallel to the front wall on the edge of the loading bed opposite to the edge where the front wall extends from the loading bed plane. The rear wall extends in the height direction away from the chassis. The rear wall is advantageous in that the goods are also secured against a rear wall during road transport.

According to one embodiment, the rear wall is securable between two uprights. The two uprights are upright at corner points on a rear side of the loading bed. Directed upright is such that the two uprights are oriented transversely from the plane of the loading bed, away from the chassis. Preferably, the rear wall is securable to the uprights by means of a locking system selected from the non-limiting list comprising: a slide lock; two eyes each coupled to one of the uprights and to the rear wall, whereby both eyes can be connected with a padlock, pin or other suitable means; a crossbar lock, a triangle lock. Preferably, the uprights are stanchions. Being able to secure the rear wall to the structural elements is advantageous so that the goods are also secured against the rear wall. Moreover, the rear wall can thereby be secured in a fixed position during road transport.

According to one embodiment, each of the two longitudinal edges of the loading bed comprises multiple series of interconnected slats, wherein each of the profiles is hingedly coupled to only two series of the multiple series of interconnected slats. An upright is placed on the longitudinal edge of the loading bed between ends of profiles which are not coupled to each other by the same series of slats. Preferably, the upright is a stanchion that is removably placed in an opening in the loading bed. Preferably, the upright comprises third lateral guides in which the second ends of the profiles are received. Preferably, the second ends of the profiles have one or more protrusions which fit into the lateral guides.

According to one embodiment, the rear wall, in the folded state, can be recessed into the loading bed. Preferably, the rear wall is hingedly positioned on a top edge of the rear side of the loading bed. Preferably, the rear wall has the same height in the unfolded state as the top profile in the unfolded state. By being recessed in the loading bed, the rear wall cannot cause any unevenness in the loading bed, whereby goods which are still to be secured with tie-down straps, for example because they extend beyond the plane of the loading bed, can be placed on a flat loading bed.

According to one embodiment, the rear wall is coupled to a second drive system. Preferably, the second drive system is selected from the non-limiting list of a piston-cylinder mechanism, spindles, linear actuators, a rack and pinion mechanism, a belt and pulley system. More preferably, the drive system is a piston-cylinder mechanism with direct transmission. This embodiment is advantageous in that the rear wall does not need to be pulled manually to be unfolded, but this can be performed by mechanical transmission, whereby the force used by an operator can be less than that for completely manually folding and unfolding expanding the rear wall.

According to one embodiment, the rear wall has a grid form. The grid form comprises upright beams and transverse beams. In the unfolded state, the upright beams extend in the height direction and the transverse beams extend in a width direction. Preferably, the upright and transverse beams have the same width and the same height as the profiles. The grid form is advantageous for a more lightweight construction of the transport device compared to using a solid surface for the rear wall. This is additionally advantageous because the rear wall thereby catches less wind during travel.

According to one embodiment, the grid comprises at most thirty transverse beams, preferably at most nine transverse beams, and more preferably at most three transverse beams. The grid comprises at most thirty upright beams, preferably at most nine, and more preferably at most three upright beams. Preferably, a number of upright beams is greater than or equal to the number of transverse beams.

According to a further embodiment, the grid comprises a topmost transverse beam which is oriented parallel to the plane of the loading bed when the rear wall is in the unfolded state. The topmost transverse beam is positioned in the height direction at least at the same height as the two uprights that extend in a height direction.

According to one embodiment, the first end of each profile is received in a first lateral guide in the front wall when the profiles are in the unfolded state. The first lateral guide is one of the at least one guide. The first guides extend in the height direction. Preferably, the first ends of the profiles have one or more protrusions which fit into the lateral guides. Preferably, the one or more protrusions have a thicker head which can be secured behind a slot of each lateral guide. This is advantageous so that there is extra support to be able to hold the profiles in the lateral guides in the unfolded state during road transport. It is clear that in this embodiment, in combination with an embodiment where multiple sets are present on one longitudinal edge, only those profiles with the first end located closest to the front wall are received in the first lateral guide.

According to one embodiment, a second end of each profile is received in a second lateral guide in the rear wall when the profiles are in the unfolded state. Preferably, the grid of the rear wall comprises an upright beam at each end of the rear wall in the width direction. Preferably, two lateral guides are received in the upright beams at an end of the rear wall in the width direction. Preferably, the second ends of the profiles have one or more protrusions which fit into the lateral guides. Preferably, the one or more protrusions have a thicker head which can be secured behind a slot of each lateral guide. This is advantageous so that there is extra support to be able to hold the profiles in the lateral guides in the unfolded state during road transport. It is clear that in this embodiment, in combination with an embodiment where multiple sets are present on one longitudinal edge, only those profiles with the second end located closest to the rear wall are received in the second lateral guide.

An embodiment is advantageous wherein lateral guides are comprised on the front wall and the rear wall so that the profiles in the unfolded state can receive extra support to be able to remain standing in the unfolded state and to prevent the goods from pushing the profiles outwards at the ends.

According to an alternative embodiment, a second lateral guide is received in each upright positioned at a corner point on the rear of the loading bed. Each of the second lateral guides is positioned at an edge that is directed toward the second end of the profiles. Preferably, the second ends of the profiles have one or more protrusions which fit into the lateral guides. Preferably, the one or more protrusions have a thicker head which can be secured behind a slot of each lateral guide. This is advantageous so that there is extra support to be able to hold the profiles in the lateral guides in the unfolded state during road transport.

According to one embodiment, a third drive system is coupled to the rear wall. The third drive system comprises a first end and a second end. The first end of the third drive system is coupled to the rear wall. The second end of the third drive system can be coupled to a first end of a rod when the profiles are in the unfolded state. The rod is a rod which is rotatably coupled to the top profile. In the case of multiple sets on one of the longitudinal edges, a rotatable rod is coupled to each top profile of each set. The third drive system is preferably coupled to a top edge of the rear wall. The top edge of the rear wall is an edge of a plane of the rear wall furthest removed from the chassis in the unfolded state; more preferably, the third drive system is coupled to the top edge of the topmost transverse beam. Preferably, the third drive system is one or more cylinders, one or more springs, or another mechanical structure for securing the rod under tension. Preferably, the rods are rotatably coupled about an axis in the height direction to the top profile of one of the sets. This embodiment is advantageous in that an extra reinforcement against the bending away of the sets relative to the loading bed in the width direction is obtained.

According to one embodiment, a fourth drive system is coupled to the front wall. The fourth drive system comprises a first end and a second end. The first end of the fourth drive system is coupled to the front wall. The second end of the fourth drive system is couplable to a first end of a rod when the profiles are in the unfolded state. The rod is a rod rotatably coupled to the top profile, which top profile is coupled to one of the series of slats. The fourth drive system is preferably coupled to an upper edge of the front wall. The upper edge of the front wall is an edge of a plane of the front wall that is most distant from the chassis. Preferably, the third drive system is one or more cylinders, one or more springs, or another mechanical structure for securing the rod under tension. Preferably, the rods are rotatably coupled around an axis in the height direction to the top profile of one of the sets. This embodiment is advantageous in that an extra reinforcement against the bending away of the sets relative to the loading bed in the width direction is obtained.

It is advantageous if the third and fourth drive systems are combined so that the profiles can be reinforced against deformation of the sets over a full length, according to the longitudinal direction.

According to one embodiment, the rods, which are couplable to the third and/or fourth drive systems, are storable in the boxes. Preferably, the rods have a maximum length of half the length of the loading bed, more preferably a maximum of two-thirds, and more preferably a maximum of one-third of the length of the loading bed. The storability of the rods is advantageous so that a whole of the set can be stored and can be covered by the lids, whereby the rods cannot be damaged in the folded state.

According to one embodiment, the first and second drive systems are hydraulically controllable. Preferably, the third and fourth drive systems are hydraulically controllable.

According to one embodiment, the profiles and the slats are made of galvanized steel, impregnated wood, and/or reinforced plastic composites.

According to one embodiment, the transport device is a cart which is couplable to a tractor by means of the chassis. Alternatively, the loading bed with chassis is integrated into a truck.

In a second aspect, the invention relates to a method for securing goods during road transport.

The method comprises the steps of: placing the goods on a loading bed, and securing the goods on the loading bed of a transport device.

According to a preferred embodiment, the transport device is a transport device according to the first aspect. The step of securing the goods on the loading bed of a transport device comprises the additional step of unfolding profiles on at least two longitudinal edges of the loading bed to an unfolded state by pivoting apart interconnected slats which couple the profiles to each other, and wherein the profiles are displaced in a height direction by means of at least one guide.

This embodiment is advantageous in that the goods can be secured to the loading bed time-efficiently. Moreover, despite the formation of a side wall, the goods can still be loaded and unloaded from the longitudinal edges of the loading bed. Furthermore, greater safety during road transport is possible because the goods cannot shift during road transport.

According to one embodiment, the method comprises the additional step of unfolding a rear wall from the loading bed, wherein the rear wall is hingedly coupled to the loading bed at a rear side of the loading bed.

According to one embodiment, the method comprises the additional step of opening the lids of the boxes in which the profiles are stored. The opening of the lids of the boxes is performed prior to the unfolding of the profiles.

According to one embodiment, the unfolding is driven by lower hinge points of interconnected slats which slide in the lower guides by means of a first and a second drive system. The profiles slide upward, each with a first end and a second end in a first and a second guide, respectively. The first and the second guide extend in the height direction.

According to one embodiment, the method comprises the additional step of coupling a first end of a rod with a third drive system. The third drive system is coupled to the rear wall with a first end. The rod is coupled to a second end of the third drive system. A second end of the rod is coupled with a top profile of a set, wherein the set is in the unfolded state. After coupling the rod to the third drive system and the top profile of the set, the set is moved inward by pulling the rod by means of the third drive system. This embodiment is advantageous in that an extra reinforcement against the bending away of the sets relative to the loading bed in the width direction is obtained.

According to one embodiment, the method comprises the additional step of coupling a first end of a rod with a fourth drive system. The fourth drive system is coupled to the front wall with a first end. The rod is coupled to a second end of the fourth drive system. A second end of the rod is coupled with a top profile of a set, wherein the set is in the unfolded state. After coupling the rod to the fourth drive system and the top profile of the set, the set is moved inward by pulling the rod by means of the fourth drive system. This embodiment is advantageous in that an extra reinforcement against the bending away of the sets relative to the loading bed in the width direction is obtained.

One skilled in the art will appreciate that a method according to the second aspect is preferably carried out with a transport device according to the first aspect and that a transport device according to the first aspect is preferably configured for carrying out a method according to the second aspect. Any feature described in this document, both above and below, can therefore relate to any of the aspects of the present invention.

Specific embodiments according to the invention are shown below:
1. A transport device for road transport of goods with integrated load securing, wherein the transport device comprises a loading bed for stacking goods, wherein the loading bed is placed on a chassis, wherein a front wall extends at a front side of and transversely to the loading bed in a direction away from the chassis, characterized in that the transport device comprises, at two longitudinal edges of the loading bed, lying profiles for securing the goods, wherein the profiles extend in a longitudinal direction, wherein the profiles are translationally movable in a height direction, wherein the profiles on the same longitudinal edge are coupled to each other by means of a series of slats positioned one above the other, wherein the slats of each series of slats are alternately hingedly coupled at a first end or an opposite second end to a slat positioned thereabove, wherein the slats form a foldable accordion mechanism, wherein each profile is hingedly coupled to a slat between the first end and the second end, and wherein a first end of each profile is received in at least one guide, wherein the guide is oriented in the height direction.
2. The transport device according to embodiment 1, characterized in that the profiles and the slats are storable in boxes in the folded state, wherein the profiles are slid next to and/or under each other like an accordion, and wherein the profiles are positioned next to each other in the height and/or width direction.
3. The transport device according to embodiment 2, characterized in that the profiles are coupled to the boxes, wherein the boxes are coupled to side walls of the loading bed or are integrated into the chassis.
4. The transport device according to embodiments 2 or 3, characterized in that the profiles are coverable in the boxes by means of lids in the folded state.
5. The transport device according to any one of the preceding embodiments 1-4, characterized in that the profiles can be folded or unfolded by a first drive system, wherein the first drive system is coupled to a bottom slat of each series of slats.
6. The transport device according to any one of the preceding embodiments 1-5, characterized in that the slats form scissor mechanisms, wherein lower ends of the scissor mechanisms are slidable in lower guides.
7. The transport device according to any one of the preceding embodiments 1-6, characterized in that the loading bed comprises a rear wall, wherein the rear wall is pivotably coupled to a rear side of the loading bed, wherein the rear wall, in an unfolded state, extends parallel to the front wall at an edge of the loading bed opposite to an edge on which the front wall extends on the plane of the loading bed, wherein the rear wall extends in the height direction away from the chassis.
8. The transport device according to embodiment 7, characterized in that the rear wall can be recessed into the loading bed in the folded state.
9. The transport device according to embodiments 7 or 8, characterized in that the rear wall has a grid form, wherein the grid form comprises upright beams and transverse beams, wherein in the unfolded state the upright beams extend in the height direction and the transverse beams extend in a width direction.
10. The transport device according to any one of the preceding embodiments 7-9, characterized in that in the unfolded state, a first end of each profile is received in a first lateral guide in the front wall, and wherein a second end of each profile is received in a second lateral guide in the rear wall.
11. The transport device according to any one of the preceding embodiments 7-10, characterized in that a third drive system is coupled to the rear wall, wherein the third drive system comprises a first end and a second end, wherein the first end of the third drive system is coupled to the rear wall and the second end of the third drive system is couplable to a first end of a rod when the profiles are in the unfolded state, wherein the rod is a rod which is rotatably coupled with the top profile.
12. The transport device according to any one of the preceding embodiments 1-11, characterized in that a fourth drive system is coupled to the front wall, wherein the fourth drive system comprises a first end and a second end, wherein the first end of the fourth drive system is coupled to the front wall and the second end of the fourth drive system is couplable to a first end of a rod when the profiles are in the unfolded state, wherein the rod is a rod which is rotatably coupled with the top profile.
13. The transport device according to any one of the preceding embodiments 2-4 and embodiments 11 or 12, characterized in that the rods are storable in the boxes.
14. A method for securing goods during road transport, the method comprising the steps of: placing the goods on a loading bed, and securing the goods on the loading bed of a transport device; characterized in that the transport device for securing goods is a transport device according to any one of the preceding embodiments 1-14 and that the step of securing the goods on the loading bed of a transport device comprises the additional step of unfolding profiles on at least two longitudinal edges of the loading bed into an unfolded state by hinging apart interconnected slats which couple the profiles to each other, and wherein the profiles are displaced in a height direction by means of at least one guide.
15. The method according to embodiment 14, characterized in that the method comprises the additional step of unfolding a rear wall from the loading bed, wherein the rear wall is hingedly coupled to the loading bed at a rear side of the loading bed.
16. The method according to embodiment 14 or 15, wherein the method comprises the additional step of: opening lids of boxes in which the profiles are stored, wherein the opening of the lids is performed prior to the unfolding of the profiles.
17. The method according to any one of embodiments 14-16, characterized in that the unfolding is driven by lower hinge points of interconnected slats which slide in lower guides by means of a first and a second drive system, wherein the profiles each slide upward with a first end and a second end respectively in a first and a second guide in the height direction.
18. The method according to any one of embodiments 14-17, wherein the method comprises the additional step of coupling a first end of a rod with a fourth drive system, wherein the fourth drive system is coupled to the front wall by a first end, wherein the rod is coupled to a second end of the fourth drive system, wherein a second end of the rod is coupled with a top profile of a set, wherein the set is in the unfolded state, wherein after coupling the rod to the fourth drive system and the top profile of the set, the set is moved inward by pulling the rod by means of the fourth drive system.

Hereinafter, the invention is described with reference to figures that illustrate the invention and are not intended to be interpreted as limiting the scope of the invention.

### DESCRIPTION OF THE FIGURES

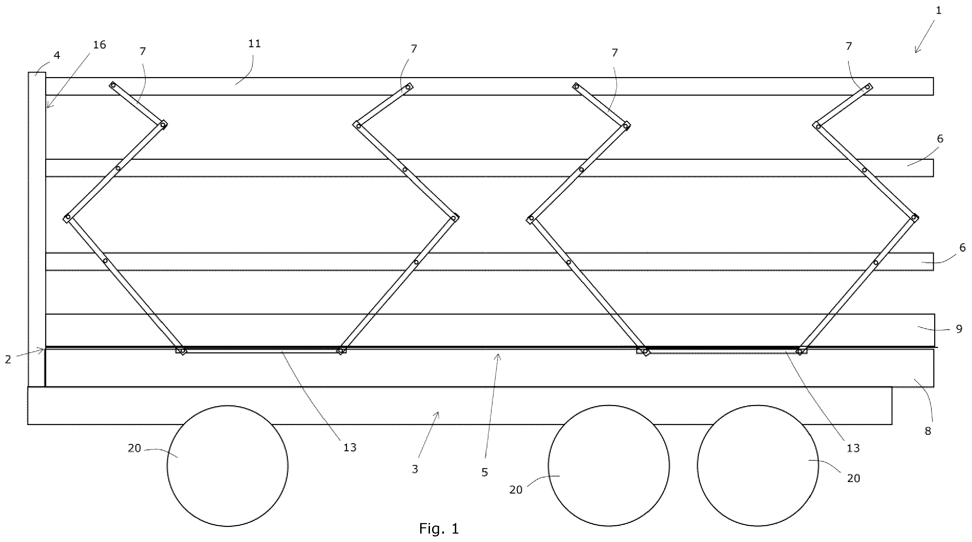

**Figure 1** shows a schematic representation in a side view of a transport device (1) according to an embodiment of the present invention.

The transport device (1) for road transport of goods with integrated load securing comprises a loading bed (2) for stacking goods placed on a chassis (3) with wheels (20). A front wall (4) extends at a front side of and transverse to the loading bed (2) in a direction away from the chassis (3). The transport device (1) comprises, at two longitudinal edges (5) of the loading bed (2), lying profiles (6) for securing the goods. The number of profiles (6) per longitudinal edge (5) is three. Each profile (6) has a height of 26 cm and a width of 18 cm so that the profiles (6) can withstand 42 kg/m without deflection. The profiles (6) extend in a longitudinal direction. The profiles (6) are translationally movable in a height direction and are shown in Figure 1 in the unfolded state. The profiles (6) at a same longitudinal edge (5) are coupled to one another by means of a series of slats (7) positioned one above the other. A same longitudinal edge (5) comprises four series of slats (7) positioned one above the other, also referred to as series of slats (7). Between each series of slats (7) there is a distance of 240 cm in the longitudinal direction. The slats (7) of each series of slats (7) are hingedly coupled with an overlying slat (7) alternately at a first end or an opposite second end. The slats (7) form a foldable accordion mechanism. Within a set which comprises profiles (6) and interconnected slats (7), each profile (6) is hingedly coupled to a slat (7) between the first end and the second end of the slat. A first end of each profile (6) is received in a lateral guide (16), wherein the guide (16) is positioned in the height direction on the front wall (4). The first end of each profile (6) comprises a protrusion. The lateral guide (16) is a slot in which the protrusions on the first end of each profile (6) are received. The longitudinal edges (5) of the loading bed (2) are located at a height of 86 cm with respect to a surface on which the wheels (20) rest. In the unfolded state, an upper edge of a first profile (6) is at 191 cm, an upper edge of a second profile (6) is at 297 cm, and an upper edge of a top profile (11) is at 400 cm with respect to the surface.

The transport device (1) comprises two boxes (8), each with a lid (9), in which the profiles (6) and the slats (7) are storable in the boxes (8) in the folded state. The profiles (6) can be slid one above the other like an accordion. The bottom slat (7) of a series is slidably coupled to an inner wall of each box (9). The two boxes (8), each one at a longitudinal edge (5) of the loading bed (2), are coupled to side walls of the loading bed (2). The lids (9), in the open position, can correctly align the goods. The profiles (6) can be folded or unfolded by a first drive system that is coupled to a bottom slat (7) of each series of slats (7), whereby the bottom slat (7) is slidable in a lower guide (13) so that an accordion mechanism of a series of slats (7) can pivot open. In this embodiment, the boxes (8) have the same height as a height of the loading bed (2). In this embodiment, the first drive system is a spindle.

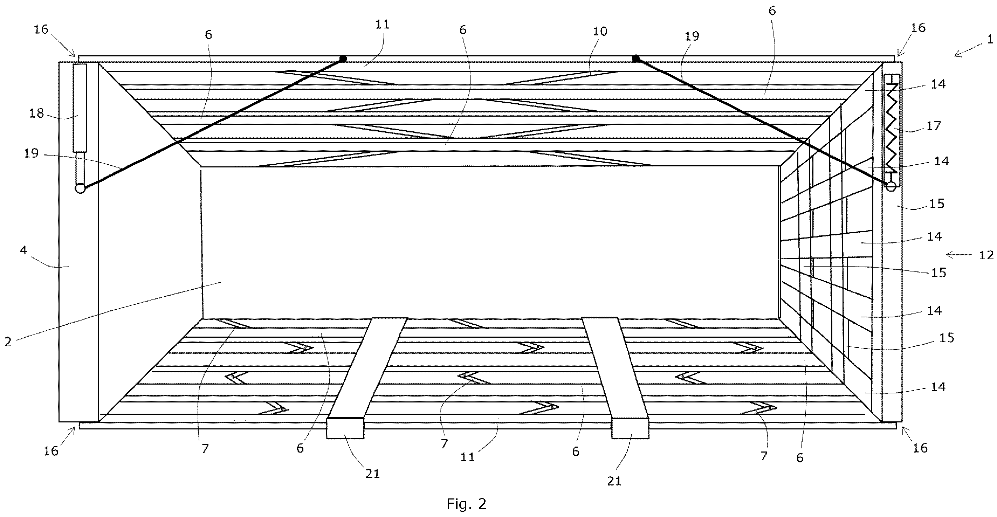

**Figure 2** shows a schematic representation in a top view of a transport device (1) according to an embodiment of the present invention.

The transport device (1) has a similar construction to the transport device (1) from Figure 1. In this embodiment, the number of profiles (6) per longitudinal edge (5) is four. Each profile (6) has a height of 30 cm and a width of 10 cm. The profiles (6) are translationally movable in a height direction and are shown in Figure 2 in the unfolded state.

The profiles (6) at a first longitudinal edge (5) are coupled to one another by means of two scissor mechanisms (10). The scissor mechanisms (10) are slidable in the longitudinal direction on outer sides of the profiles (6). The scissor mechanisms (10) comprise four slats (7). The limited slidability of the scissor mechanisms on the profiles (6) determines the maximum height of a profile (6) in the unfolded state. Lower ends of a lowermost scissor mechanism are slidable in lower guides (13). The profiles (6) can be folded and unfolded by the scissor mechanisms by means of a first drive system, wherein the first drive system is a hydraulic cylinder. Upper ends of an uppermost scissor mechanism are slidable in the top profile (6).

The profiles (6) at a second longitudinal edge (5) are coupled to one another by means of a series of slats (7) positioned one above the other. Said longitudinal edge (5) comprises three series of four slats (7) positioned one above the other, also referred to as series of slats (7). Between each series of slats (7) there is a distance of 290 cm in the longitudinal direction. The slats (7) of each series of slats (7) are hingedly coupled with an overlying slat (7) alternately at a first end or an opposite second end. The slats (7) form a foldable accordion mechanism. Within a set, which comprises profiles (6) and interconnected slats (7), each profile (6) is hingedly coupled to a slat (7) between the first end and the second end of the slat. A first end of each profile (6) is received in a lateral guide (16), wherein the guide is oriented in the height direction, wherein one lateral guide (16) is provided on the front wall (4), one lateral guide (16) is provided on the rear wall (12), and each of two uprights (21) comprises two lateral guides (16) on opposite sides. The two uprights (21) are retractable into the loading bed (2). The profiles (6) can be folded or unfolded by means of a first drive system. The first drive system is hydraulic and is coupled to a bottom slat (7) of each series of slats (7).

The longitudinal edges (5) of the loading bed (2) are located at a height of 91 cm with respect to a surface on which the wheels (20) rest. In the unfolded state, an upper edge of a first profile (6) is at 163 cm, an upper edge of a second profile (6) is at 236 cm, an upper edge of a third profile (6) is at 309 cm, and an upper edge of a top profile (11) is at 381 cm with respect to the surface.

The loading bed (2) comprises a rear wall (12). The rear wall (12) is hingedly attached to a rear side of the loading bed (2). The rear wall (12) extends in the unfolded state parallel to the front wall (4) at an edge of the loading bed (2) opposite to the edge on which the front wall (4) extends on the plane of the loading bed (2), as shown in Figure 2. The rear wall (12) extends in the height direction away from the chassis (3). The rear wall (12) can be recessed into the loading bed (2) in the folded state. The rear wall (12) has a grid form. The grid form comprises five upright beams (14) and three transverse beams (15). In the unfolded state, the upright beams (14) extend in the height direction and the transverse beams (15) extend in a width direction.

The transport device (1) comprises a third drive system (17) on the rear wall (12). The third drive system (17) comprises a first end and a second end, wherein the first end is coupled to the rear wall (12) and is recessed in a topmost transverse beam, and the second end is couplable to a first end of a rod (19) when the profiles (6) are in the unfolded state. The rod (19) is a rod (19) which is rotatably coupled to the top profile (11). In this embodiment, the third drive system (17) is a spring. The transport device (1) comprises, on the front wall (4), a fourth drive system (18) which is coupled with the front wall (4). The fourth drive system (18) comprises a first end and a second end, wherein the first end is coupled at a side edge of the front wall (4) and the second end is couplable to a first end of a rod (19) when the profiles (6) are in the unfolded state. The fourth drive system (18) is a pneumatic piston-cylinder. The rod (19) is a rod (19) which is again rotatably coupled with the top profile (11).
1) Transport device
2) Loading bed
3) Chassis
4) Front wall
5) Longitudinal walls
6) Profiles
7) Slat, of a series of slats positioned one above the other
8) Box
9) Lid
10)Scissor mechanism
11)Top profile
12)Rear wall
13)Lower guide
14)Upright beam
15)Transverse beam
16)Lateral guide
17)Third drive system
18)Fourth drive system
19) Rod
20)Wheel
21)Upright

## Claims

1. A transport device for road transport of goods with integrated load securing, wherein the transport device comprises a loading bed for stacking goods, wherein the loading bed is placed on a chassis, wherein a front wall extends at a front side of and transversely to the loading bed in a direction away from the chassis, wherein the transport device comprises, at two longitudinal edges of the loading bed, lying profiles for securing the goods, wherein the profiles extend in a longitudinal direction, wherein the profiles are translationally movable in a height direction, wherein the profiles on the same longitudinal edge are coupled to each other by means of a series of slats positioned one above the other, wherein the slats of each series of slats are alternately hingedly coupled at a first end or an opposite second end to a slat positioned thereabove, wherein the slats form a foldable accordion mechanism, wherein each profile is hingedly coupled to a slat between the first end and the second end, and wherein a first end of each profile is received in at least one guide, wherein the guide is oriented in the height direction.

2. The transport device according to claim 1, wherein the profiles and the slats are storable in boxes in the folded state, wherein the profiles are slid next to and/or under each other like an accordion, and wherein the profiles are positioned next to each other in the height and/or width direction.

3. The transport device according to claim 2, wherein the profiles are coupled to the boxes, wherein the boxes are coupled to side walls of the loading bed or are integrated into the chassis.

4. The transport device according to claim 2 or 3, wherein the profiles in the folded state are coverable in the boxes by means of lids.

5. The transport device according to any one of the preceding claims 1-4, wherein the profiles can be folded or unfolded by means of a first drive system, wherein the first drive system is coupled to a bottom slat of each series of slats.

6. The transport device according to any one of the preceding claims 1-5, wherein the slats form scissor mechanisms, wherein lower ends of the scissor mechanisms are slidable in lower guides.

7. The transport device according to any one of the preceding claims 1-6, wherein the loading bed comprises a rear wall, wherein the rear wall is pivotably coupled to a rear side of the loading bed, wherein the rear wall, in an unfolded state, extends parallel to the front wall at an edge of the loading bed opposite to an edge on which the front wall extends on the plane of the loading bed, wherein the rear wall extends in the height direction away from the chassis.

8. The transport device according to claim 7, wherein the rear wall can be recessed into the loading bed in the folded state.

9. The transport device according to claim 7 or 8, wherein the rear wall has a grid form, wherein the grid form comprises upright beams and transverse beams, wherein in the unfolded state the upright beams extend in the height direction and the transverse beams extend in a width direction.

10. The transport device according to any one of the preceding claims 7-9, wherein in the unfolded state a first end of each profile is received in a first lateral guide in the front wall, and wherein a second end of each profile is received in a second lateral guide in the rear wall.

11. The transport device according to any one of the preceding claims 7-10, wherein a third drive system is coupled to the rear wall, wherein the third drive system comprises a first end and a second end, wherein the first end of the third drive system is coupled to the rear wall and the second end of the third drive system is couplable to a first end of a rod when the profiles are in the unfolded state, wherein the rod is a rod which is rotatably coupled with the top profile.

12. The transport device according to any one of the preceding claims 1-11, wherein a fourth drive system is coupled to the front wall, wherein the fourth drive system comprises a first end and a second end, wherein the first end of the fourth drive system is coupled to the front wall and the second end of the fourth drive system is couplable to a first end of a rod when the profiles are in the unfolded state, wherein the rod is a rod which is rotatably coupled with the top profile.

13. A method for securing goods during road transport, the method comprising the steps of: placing the goods on a loading bed, and securing the goods on the loading bed of a transport device; wherein the transport device for securing goods is a transport device according to any one of the preceding claims 1-14, and wherein the step of securing the goods on the loading bed of a transport device comprises the additional step of unfolding profiles on at least two longitudinal edges of the loading bed to an unfolded state by hinging apart interconnected slats which couple the profiles to each other, and wherein the profiles are moved in a height direction by means of at least one guide.

14. The method according to claim 13, wherein the method comprises the additional step of unfolding a rear wall from the loading bed, wherein the rear wall is hingedly coupled to the loading bed at a rear side of the loading bed.

15. The method according to claim 13 or 14, wherein the method comprises the additional step of: opening lids of boxes in which the profiles are stored, wherein the opening of the lids is performed prior to the unfolding of the profiles.
